# EUROPÄISCHE PATENTSCHRIFT

(11) **EP 2 480 714 B1**
(45) Veröffentlichungstag und Bekanntmachung des Hinweises auf die Patenterteilung: **31.08.2016**
(21) Anmeldenummer: 10762855.4
(22) Anmeldetag: 27.07.2010
(51) Int. Cl.: B05D 7/08, D06N 7/00, B27K 3/15, B27K 3/34, B27N 7/00, C09D 5/24, C09D 5/02, C09D 5/03, C09D 5/10

(54) **VERFAHREN ZUR OBERFLÄCHENBEHANDLUNG EINER PRESSHOLZPLATTE**
METHOD FOR TREATING A SURFACE OF A COMPRESSED-WOOD BOARD
PROCÉDÉ DE TRAITEMENT DE SURFACE D'UNE PLAQUE DE BOIS IMPRÉGNÉ DENSIFIÉ

(30) Priorität: 27.07.2009 AT 11762009; 05.10.2009 AT 15692009
(43) Veröffentlichungstag der Anmeldung: 01.08.2012
(73) Patentinhaber: Mikowitsch, Herbert, 2340 Mödling (AT)
(72) Erfinder: Mikowitsch, Herbert, 2340 Mödling (AT)
(74) Vertreter: Burger, Hannes
(86) Internationale Anmeldenummer: PCT/AT2010/000276
(87) Internationale Veröffentlichungsnummer: WO 2011/011804

(56) Entgegenhaltungen:
- WO-A1-2007/088245
- WO-A1-2008/078181
- WO-A1-2008/091045
- DE-T2- 69 924 029
- US-A- 3 219 473
- US-A- 4 686 108
- US-A- 5 059 264
- US-A1- 2002 081 393
- US-B1- 6 265 027

## Beschreibung

Die Erfindung betrifft ein Verfahren zur Oberflächenbehandlung einer Pressholzplatte gemäß dem Oberbegriff von Anspruch 1.

Unter dem Begriff Pressholzplatten werden in diesem Dokument Platten aus faser- oder spanförmigen Holzwerkstoffen oder aus einem Gemisch von Holz mit anderen natürlichen Fasern (Stroh, Bambus, Bambusblätter etc.) bzw. Kunststofffasern wie z.B. Polyester verstanden, wobei diese Holzersatzfasern auch als alleiniges Fasermaterial eingesetzt werden können. Insbesondere werden unter dem Begriff Pressholzplatten aus den oben genannten Stoffen hergestellte mitteldichte (Holz)faserplatten (sogenannte "MDF-Platten") und hochdichte (Holz)faserplatten (sogenannte "HDF Platten") verstanden.

Ein Verfahren gemäß dem Oberbegriff von Anspruch 1 ist aus der DD292412A5 bekannt geworden. Die DE9100507U1 betrifft die Verwendung einer Klebefolie zur Beschichtung einer Pressholzplatte anstelle einer Lackierung. Aus der US3219473 ist es bekannt geworden eine Pressholzplatte zu grundieren mit einem nicht-wässrigen Sperrlack. Die US6265027 B1 betrifft eine Grundierung mit einem Gehalt von Acrylharz von 0 bis 8 %.

Aus der WO 2007/088245 A1 ist es bekannt
geworden eine Pressholzplatte zu grundieren und auf diese Grundierung eine Deckschicht aus Harz durch Heißverpressen aufzubringen. Die US2009/0005494 A1 betrifft die Beschichtung von Mineralstoffplatten, die mit Fasern verstärkt sein können. Aus der DE 699 24 029 T2 ist eine Grundierung bekannt geworden, welche einen schnell härtenden Latex (DOW DT 211 NA) beinhaltet. Diese Grundierung wird gemäß der technischen Lehre der DE 699 24 029 T2 auf ein Substrat aufgebracht und hierauf unter thermischen Einfluss und erhöhtem Druck mit weiteren Schichten verpresst, um ein Verbundsubstrat mit einer glatten Oberfläche und geringer Porosität zu erzielen. Bei MDF-Platten ist die Verdichtung an der Oberfläche höher als im Plattenkern.

Werden in eine MDF-Platte Profile eingefräst, wie dies in der Möbelindustrie häufig der Fall ist, so kann es in Abhängigkeit von der Frästiefe bei einer nachfolgenden Lackierung mit wässrigen Decklacken speziell in den gefrästen Oberflächenbereichen zu einem extremen Aufstellen der Fasern kommen. Was zu einem unansehnlichen Gesamteindruck der lackierten Oberfläche führen kann. Die gefrästen Oberflächen zeigen, dass vor allem der wässrige Decklack bzw. die wässrige Grundierung durch die geringere Verdichtung der Fasern stark in die MDF-Platte eingedrungen sind. Aber auch bei lösungsmittelhältigen Decklacken zeigt sich ein ähnlicher Effekt, wenn auch nicht so stark. Speziell in tief gefrästen Profilen kommt es zu einem sehr starken Aufstellen der Holzfasern. Diese können in der Praxis auch durch Flatterbehandlung oder durch Schleifen kaum entfernt werden. Wird extrem stark geschliffen, dann wird meistens die erste Lackschicht fast zur Gänze wieder weggeschliffen und die zweite nachfolgende Lackierung zeigt durch die sogenannte "Dochtwirkung" den gleichen Aufstelleffekt der Fasern.

Ein weiteres wesentliches Problem bei MDF-Platten tritt bei der Herstellung von Möbelfronten auf. Wird mit herkömmlichen handelsüblichen Wasserlacken grundiert, dann werden die Fasern aufgequollen und stellen sich auf. Durch den nachfolgenden Schleifprozess werden die Fasern geköpft, aber es bleibt dadurch eine Fehlstelle im Lack und bei einer Einwirkung von Wasserdampf oder Wasser wird das Wasser wie durch einen Docht aufgesogen, was wiederum zu einem Anquellen der Holzfaserplatte führt. Insbesondere Küchenfronten, die besonders stark einer Wasserdampfbelastung ausgesetzt sind, können starke Schäden zeigen. Das Anquellen der Holzfaserplatte hängt natürlich auch von der Menge und der Art des zu ihrer Herstellung verwendeten Bindemittels ab.
Bei HDF-Platten kann die Oberflächenverdichtung sehr inhomogen sein, wodurch es bei einer Lackierung mit pigmentierten Decklacken, die beispielsweise in einem Walz-, Druck- oder Spritzverfahren aufgetragen werden, zu einem unterschiedlichen Wegsacken der Lacke bzw. Grundierungen kommen kann, was unterschiedliche Deckfähigkeiten eines verwendeten Lackes auf einer HDF-Platte zur Folge hat. Bei wässrigen Lacken stellt sich zudem häufig das Problem, dass die Holzoberfläche beim Behandeln rau wird und daher nachgeschliffen werden muss, um eine hinreichend glatte Oberfläche zu erhalten. Da hierbei auch ein Teil des Oberflächenbehandlungsmittels abgetragen wird, muss der Behandlungs- und Schleifvorgang in der Regel mehrfach wiederholt werden, was einen nicht unbeträchtlichen Aufwand darstellt. Es ist daher eine Aufgabe der Erfindung, die mit den herkömmlichen Verfahren verbundenen Nachteile zu überwinden.

Diese Aufgabe wird mit einem Verfahren der eingangs genannten Art erfindungsgemäß durch die Merkmale des kennzeichnenden Teils von Anspruch 1 gelöst.
Unter dem Begriff "auf Acrylatbasis" wird verstanden, dass als Hauptkomponente bzw. Hauptkomponenten zur Herstellung des Bindemittels des Sperrlackes mindestens ein Acrylat und/oder mindestens ein Acrylatcopolymer verwendet wird bzw. werden. Wie weiter unten ausgeführt, können jedoch auch noch andere Bestandteile zugefügt werden. Unter dem Begriff "wässrig" wird verstanden, dass das Bindemittel als Dispersion bzw. Emulsion in wässriger Lösung oder in Wasser gelöst vorliegt.

Der erfindungsgemäße Sperrlack bildet eine überlackierbare Sperrgrundierung und stellt aufgrund seines Kunstharzanteils eine gute Wasserdampfsperre bzw. Wasserdampfbremse dar, durch welche eine Wasserdampfdiffusion bzw. ein Eindringen von Wasser in die Pressholzplatte behindert wird. Auf diese Weise wird bei Verwendung wässriger Decklacke eine Durchfeuchtung der behandelten Pressholzplatte verhindert. Durch das erfindungsgemäße Verfahren lässt sich daher eine sehr gute Wasserunempfindlichkeit der behandelten Oberfläche erzielen. Weiters wird die Oberflächenqualität der Pressholzplatten wesentlich verbessert, da ein Aufstellen der Fasern stark minimiert werden kann. Dies ist insbesondere dann von Bedeutung, wenn die nachfolgende Lackierung mit einem wässrigen Decklack erfolgt. Darüber hinaus wird durch die erfindungsgemäße Grundierung eine homogene Oberflächenstruktur geschaffen.

Gemäß einer vorteilhaften Variante der Erfindung, die sich durch einen hohen Feststoffanteil auszeichnet, kann der Sperrlack zu 45 bis 97 Gewichtsanteilen aus einer Mischung aus dem zumindest einem Acrylat und/oder dem zumindest einem Acrylatcopolymer sowie aus zumindest einem Urethan und/oder aus zumindest einem Urethancopolymer und/oder aus zumindest einem Alkyd und/oder aus einem Alkydacrylatcopolymer bestehen. Günstig an dieser Ausführungsform ist vor allem, dass der hohe Festkörper zu einer Verminderung des Anquellens der Holzfasern beiträgt. Derartige zur Realisierung der Erfindung geeignte Lacke, sind beispielsweise unter dem Namen NeoCryl A 2099 oder NeoCryl A 1093 bekannt geworden.

Es können auch Mischungen aus zwei oder mehreren Acrylaten, Acrylatcopolymeren, U-rethancopolymeren bzw. Urethanen, Alkyd bzw. Alkydacrylatcopolymeren verwendet werden. Durch eine Mischung unterschiedlicher Emulsionen kann die Filmbildungstemperatur angepasst werden, sodass abhängig von den Produktionsbedingungen gegebenenfalls auf ein Coaleszenzmittel verzichtet werden kann. Geeignete Produkte, um den erfindungsgemäßen Sperrlack durch Vermischen verschiedener Emulsionen herzustellen sind beispielsweise unter den Namen NeoCryl XK 85, NeoCryl XK 87 oder NeoCryl A 2092 bekannt geworden.

Gemäß einer bevorzugten Variante der Erfindung wird der Sperrlack vor einem Überlackieren mit dem Decklack getrocknet, wobei das Trocknen des Sperrlackes bevorzugterweise bei einer Temperatur zwischen 30 und 150°C erfolgt.

Falls erforderlich, kann dem Sperrlack ein Anteil an Filmbildungsmittel von bis zu 16% zugesetzt werden, beispielsweise Butyldiglykol (BDG) oder Butylglkol (BG). Neben Weichmachern zur Filmbildung können auch Kombinationen von Filmbildungsmitteln und Koaleszenzmitteln oder auch nur ein Koaleszenzmittel von bis 16% vorgesehen sein. An dieser Stelle sei erwähnt, dass sich die Prozentangaben in diesem Dokument auf den Massenanteil beziehen.

Der pH Wert des Sperrlackes kann auf einen Wert in einem basischen Bereich, vorzugsweise auf einen Wert von 7-9, eingestellt werden, beispielsweise durch Zugabe von Ammoniak oder Aminen, etwaige Koaleszenzmittel können dann unter Rühren zugesetzt werden. Der pH-Wert des unter Rühren zugesetzten Koaleszenzmittels bzw. der Koaleszenzmittel wird hierbei vorteilhafterweise vor dem Einrühren auch auf einen in einem basischen Bereich liegenden Wert, vorzugsweise ebenfalls auf einen Wert im Bereich von 7 - 9, eingestellt. Günstigerweise wird das Koaleszenzmittel hierbei auf den pH-Wert des Sperrlacks eingestellt.

Gemäß einer weiteren Variante der Erfindung kann der Sperrlack einen Wachsanteil von bis zu 10% aufweisen.

Darüber hinaus kann dem Sperrlack zumindest ein Entschäumer, beispielsweise Agitan E 255, in einem Anteil von 0,01 - 5 % zugesetzt werden.

Um eine gute Verarbeitbarkeit zu erzielen, kann dem Sperrlack gegebenenfalls zumindest ein Verdicker, beispielsweise Rheocoate 35, in einem Anteil bis zu 5% zugesetzt werden.

Weiters kann dem Sperrlack zumindest ein Verlaufsmittel, beispielsweise Surfynol 104 PA, in einem Anteil von bis zu 3%.

Weiters können dem erfindungsgemäßen Sperrlack an sich bekannte, farbgebende Pigmente und/oder Füllstoffe in einem Anteil von bis zu 18% zugesetzt werden.

Gemäß einer Ausführungsform der Erfindung kann der Sperrlack als Einkomponentenlack verwendet werden.

Jedoch kann der Sperrlack gemäß einer anderen Variante der Erfindung auch als 2-Komponenten Lack verwendet werden, wobei zumindest ein Vernetzungsmittel zugesetzt wird, beispielsweise zumindest ein Isocyanat nd/oder Aziridin und/oder zumindest ein Zinkkomplexbilder.

Gemäß einer Variante der Erfindung kann der der Sperrlack elektrisch leitfähig sein, wobei dem Sperrlack elektrisch leitfähige Pigmente beigefügt werden können. Alternativ oder ergänzend hierzu kann der Sperrlack zumindest ein elektrisch leitfähiges Acrylat und/oder zumindest ein elektrisch leitfähiges Acrylatcopolymer und/oder zumindest ein elektrisch leitfähiges Polyurethan aufweisen. Auf diese Weise lässt sich eine gute Beschichtbarkeit mit Pulverlacken, selbst von MDF-Platten mit einem geringen Feuchtigkeitsgehalt, realisieren, da die für die Pulverbeschichtung erforderliche elektrische Leitfähigkeit durch den Sperrlack verwirklicht werden kann.

Gemäß einer vorteilhaften Variante der Erfindung kommt als Decklack ein herkömmlicher wässriger Lack oder auch sogenannte UV-Lacke, welche unter UV-Einstrahlung gehärtet werden, zum Einsatz.

Entsprechend einer anderen Variante der Erfindung, welche vor allem bei leitfähigen Sperrlacken zum Einsatz kommen kann, wird als Decklack ein Pulverlack verwendet.

Die Erfindung samt weiteren Vorteilen wird im Folgenden anhand einiger nicht einschränkender Ausführungsbeispiele näher erläutert, welche in den Zeichnungen dargestellt sind. In diesen zeigen schematisch:
- Fig. 1: den Aufbau einer mit einem erfindungsgemäßen Sperrlack beschichteten und mit einem wässrigen Decklack überlackierten Pressholzplatte, und
- Fig. 2: die Pressholzplatte aus Fig. 1 mit einem auf den erfindungsgemäßen Sperrlack aufgetragenen Pulverlack als Decklack.

Einführend sei festgehalten, dass die Figuren zusammenhängend und übergreifend beschrieben sind, wobei in den unterschiedlich beschriebenen Ausführungsformen gleiche Teile mit gleichen Bezugszeichen bzw. gleichen Bezeichnungen versehen werden, und die in der gesamten Beschreibung enthaltenen Offenbarungen sinngemäß auf gleiche Teile mit gleichen Bezugszeichen bzw. gleichen Bezeichnungen übertragen werden können. Ähnliche Teile oder funktionsähnliche Teile tragen gleiche Bezugszeichen mit unterschiedlichen Indizes. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

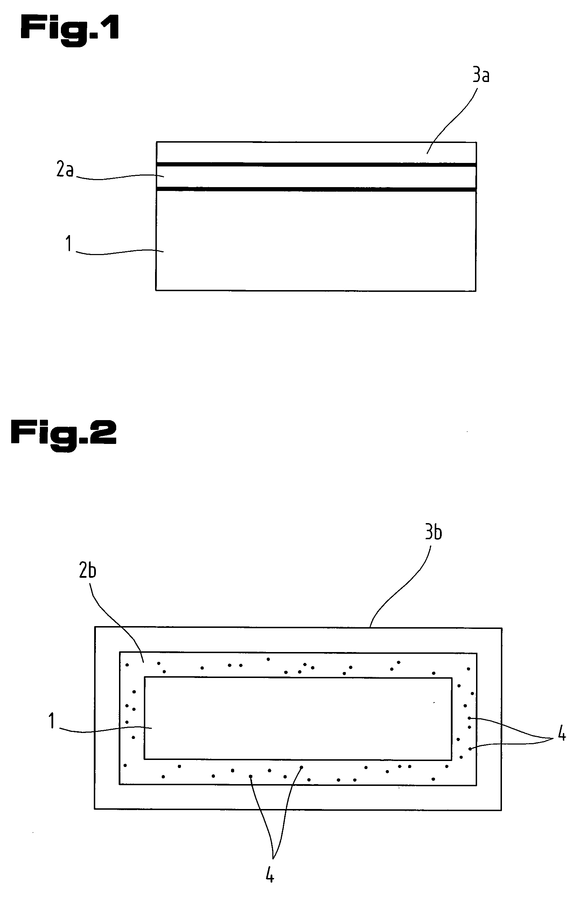

Gemäß Fig. 1 wird bei einem erfindungsgemäßen Verfahren zur Oberflächenbehandlung einer Pressholzplatte 1 die zu lackierende Oberfläche der Pressholzplatte 1 zur Erzeugung einer Wasserdampfsperre mit einer wasserdampfsperrenden Grundierung aus einem Sperrlack 2a auf Acrylatbasis versehen. Der Sperrlack 2a weist mindestens ein Acrylat und/oder mindestens ein Acrylatcopolymer auf. Weiters kann der Sperrlack 2a als Klarlack oder auch als pigmentierter Lack ausgeführt sein.

Der erfindungsgemäße Sperrlack 2a kann zu 45 bis 97 Gewichtsanteilen aus einer Mischung aus mindestens einem Acrylat und/oder mindestens einem Acrylatcopolymer sowie aus mindestens einem Urethan und/oder aus mindestens einem Urethancopolymer und/oder aus mindestens einem Alkyd und/oder aus einem Alkydacrylcopolymer bestehen. Die oben genannten Bestandteile liegen in dem Sperrlack 2a in Wasser gelöst bzw. dispergiert oder emulgiert vor. Aufgrund seines hohen Kunstharzanteils von über 35 % kann mit dem Sperrlack 2a eine sehr gute Wasserdampfsperre erzielt werden. An dieser Stelle sei darauf hingewiesen, dass mit dem erfindungsgemäßen Sperrlack keine absolute Wasserdampfsperre erzielt werden muss. In erster Linie kommt es darauf an, dass die erzielte Wasserdampfsperre ausreichend ist, um ein Eindringen von Wasser bzw. Wasserdampf zu behindern, sodass ein Aufquellen der Fasern der Pressholzplatte weitgehend unterbunden wird.

Der Sperrlack 2a kann beispielsweise durch Produkte wie NeoCryl A 2099 oder NeoCryl A 1093 realisiert werden, wobei jedoch auch andere geeignete Lacke und Mischungen, welche die gewünschten Eigenschaften hinsichtlich der Bildung einer Wasserdampfsperre aufweisen, zum Einsatz kommen können.

Der erfindungsgemäße Sperrlack 2a kann sowohl als Einkomponentenlack als auch als Zweikomponenten Lack realisiert werden. Falls der erfindungsgemäße Sperrlack als Zweikomponentensystem verwendet wird, können beispielsweise Isocyanat oder Aziridinen oder Zinkkomplexbildern als Vernetzer zugegeben werden.

Weiters kann der erfindungsgemäße Sperrlack 2a auch durch Mischung unterschiedlicher Emulsionen auf Acrylatbasis hergestellt werden. Hierfür können beispielsweise Produkte wie NeoCryl XK 85, NeoCryl XK 87 oder NeoCryl A 2092 zum Einsatz kommen. Zur Herstellung des Sperrlacks 2a können aber auch andere nicht acrylatbasierte Emulsionen mit einer Emulsion auf Acrylatbasis vermischt werden. So können beispielsweise eine acrylatbasierte Emulsion und eine Polyurethanemulsion und/oder eine Polyurethancopolymeremulsion miteinander vermischt werden. An dieser Stelle sei erwähnt, dass im Rahmen der Erfindung grundsätzlich alle Mischungen von mindestens einer zumindest ein Acrylat und/oder Acrylatcopolymer enthaltenden Emulsion und anderen Emulsionen möglich sind, mit welchen sich eine wasserdampfsperrende, überlackierbare Sperrgundierung der Pressholzplatte 1 erzielen lässt.

Darüber hinaus können dem Sperrlack 2a im Bedarfsfall verschiedene Additive, wie beispielsweise Filmbildungsmittel, Entschäumer, Verdickerzusätze oder Verlaufsmittel zugesetzt werden.

Auch kann der pH Wert des Sperrlackes 2a, beispielsweise durch Zugabe von Aminen und Ammoniak, so eingestellt werden, dass er in einem basischen Bereich liegt. Vorzugsweise wird der pH-Wert auf einen in einem Bereich zwischen 7 bis 9 liegenden Wert eingestellt.

Durch den Zusatz von Wachsen, beispielsweise Michelmann MA 160, kann die Bildung einer Wasserdampfsperre weiter verbessert werden. Bei dem Zusatz von Wachsen ist jedoch zu beachten, dass die Überlackierbarkeit des Sperrlackes 2a nicht beeinträchtigt wird. Auch die Haftung der auf den Sperrlack 2a folgenden Lackschichten soll möglichst wenig negativ beeinflusst werden.

Der Sperrlack 2a kann beispielsweise mittels herkömmlicher Spritz-, Walz- oder Druckverfahren auf die Pressholzplatte 1 aufgebracht werden.

Nach dem Aufbringen des Sperrlackes 2a kann dieser bei einer Temperatur zwischen 30 und 150°C getrocknet werden. Der getrocknete Sperrlack 2a bildet einen durchgehenden festen, weitgehend wasserundurchlässigen Film an der Oberfläche der Pressholzplatte 1 und schützt diese somit vor Nässe. Darüber hinaus können in der Oberfläche der Pressholzplatte 1 vorhandene Unebenheiten durch den Sperrlack 2a ausgeglichen werden. Insbesondere bei MDF-Platten ist die Qualität der gefrästen Oberflächen nach der Behandlung mit dem erfindungsgemäßen Sperrlack 2a weitgehend identisch mit den nicht gefrästen Oberflächen.

Der Sperrlack 2a kann mit einem handelsüblichen, wässrigen oder UV-Lack 3a überlackiert werden.

Auf eine direkt auf die Pressholzplatte aufgetragene Grundierungsschicht des Sperrlacks 2a können noch weitere Grundierungen sowie auch mehrere Decklacke 3a aufgetragen werden. Somit ist die erfindungsgemäße Lösung nicht auf das Auftragen einer einzigen Grundierung, der Sperrgrundierung, beschränkt, die dann mittels eines herkömmlichen Decklacks 3a überlackiert wird. So können beispielsweise auch drei Grundierungen und zwei Decklackschichten aufgetragen werden. Die Menge der aufgetragenen Grundierungen und Decklacke richtet sich hierbei in erster Linie nach den gegebenen Erfordernissen. So kann eine sehr raue und unebene Oberflächenstruktur der Pressholzplatte das Auftragen mehrerer Grundierungen erforderlich machen, während auf eine glatte Oberfläche entsprechend weniger Grundierungsschichten aufgetragen werden können.

Wie in Fig. 2 dargestellt, kann der Sperrlack 2b auch elektrisch leitend ausgebildet sein. Dies kann durch Zugabe elektrisch leitender Pigmente 4 erreicht werden. Als elektrisch leitfähige Pigmente 4 können beispielsweise leitfähige Russe oder Metallpigmente, wie Silber oder Nickelflocken, verwendet werden. Natürlich können neben den elektrisch leitenden Pigmenten dem Sperrlack 2b auch noch andere, elektrisch nicht leitfähige Pigmente, wie sie an sich bekannt sind und üblicherweise zur Farbgebung verwendet werden, und/oder Füllstoffe vorzugsweise in einer Größenordnung von 0-18% beigefügt sein.

Eine elektrische Leitfähigkeit des Sperrlackes 2b lässt sich aber auch durch Verwendung mindestens eines elektrisch leitfähigen Acrylats und/oder mindestens eines elektrisch leitfähigen Acrylatcopolymer und/oder mindestens eines elektrisch leitfähigen Polyurethans erreichen.

Die elektrische Leitfähigkeit des Sperrlackes 2b ist insbesondere dann von Bedeutung, wenn der Decklack 3b mittels einer Pulverbeschichtung aufgetragen wird. Durch eine Beschichtung mittels Pulverlacken lässt sich die Wasserdampffestigkeit von MDF-Platten weiter verbessern. Dabei tritt jedoch bei den herkömmlichen Verfahren das Problem auf, dass die in den MDF-Platten enthaltene Feuchtigkeit - üblicherweise zwischen 5 und 8% - durch ein plötzliches Erhitzen auf über 100°C zu einer Dampfbildung führt, wodurch die Pulverlackierung durch Porenbildung gestört wird. Ziel der Pulverlackierung ist es jedoch, eine komplett geschlossene Oberfläche ohne Poren zu erhalten. Einerseits ist bei den herkömmlichen Verfahren zur Pulverbeschichtung eine hohe Feuchtigkeit notwendig, um die erforderliche Leitfähigkeit der MDF-Platte zu erzielen, welche zur Verarbeitung des Pulverlackes mittels E-Statik notwendig ist, andererseits führt die hohe Feuchtigkeit zu einer Dampfbildung, welche die Lackierung stört.

Durch die erfindungsgemäße Verwendung einer elektrisch leitfähigen Grundierung können nun MDF-Platten mit einem sehr geringen Feuchtigkeitsgehalt verwendet werden. Zur Realisierung der elektrischen Leitfähigkeit der MDF-Platte ist keine Feuchtigkeit mehr notwendig, da sie zu Auftragen des Pulverlackes notwendige Leitfähigkeit bereits durch den Sperrlack 2b gegeben ist. Durch die erfindungsgemäße Lösung wird somit die Dampfbildung bei einem Einbrennen des Pulverlackes 3b stark reduziert. Darüber hinaus bildet der erfindungsgemäße Sperrlack 2b eine zusätzlichen Wasserdampfbarriere, wodurch die Wahrscheinlichkeit, dass sich bis zu Untergrund durchgehende Poren bilden ebenfalls minimiert wird.

An dieser Stelle sei erwähnt, dass sich die Angaben über die Zusammensetzung des Sperrlackes 2a auch auf den Sperrlack 2b beziehen, abgesehen von der Zugabe elektrisch leitfähiger Pigmente oder anderer elektrisch leitfähiger Bestandteile in den Sperrlack 2b.

Abschließend sei festgehalten, dass die Ausführungsbeispiele lediglich mögliche Ausführungsvarianten der erfindungsgemäßen Lösung zeigen, wobei die Erfindung nicht auf die speziell dargestellten Ausführungsvarianten eingeschränkt ist. Insbesondere sind auch Kombinationen der einzelnen Ausführungsvarianten untereinander möglich, wobei diese Variationsmöglichkeiten aufgrund der Lehre zum technischen Handeln der gegenständliche Erfindung im Können des auf diesem technischen Gebiet tätigen Fachmannes liegen. Es sind auch sämtliche denkbaren Ausführungsvarianten, die den der Erfindung zugrunde liegenden Lösungsgedanken verwirklichen und nicht explizit beschrieben bzw. dargestellt oder durch Kombinationen einzelner Details der dargestellten und beschriebenen Ausführungsvarianten möglich sind, vom Schutzumfang mit umfasst.

## Patentansprüche

1. Verfahren zur Oberflächenbehandlung einer Pressholzplatte (1) durch Lackieren, wobei eine mit einem Decklack (3a, 3b) zu lackierende Oberfläche der Pressholzplatte (1) vor dem Lackieren mit einem wässrigen Sperrlack) grundiert wird, **dadurch gekennzeichnet, dass** der wässrige Sperrlack ein wässriger Sperrlack (2a, 2b) auf Acrylatbasis ist, welcher zumindest ein Acrylat und/oder Acrylatcopolymer aufweist, wobei der Sperrlack (2a, 2b) zur Erzeugung einer Wasserdampfsperre einen Kunstharzanteil von über 35 % aufweist, und durch den Sperrlack (2a, 2b) ein Aufstellen von Fasern der Pressholzplatte während des Lackierens mit dem Decklack (3a, 3b) minimiert wird.

2. Verfahren nach Anspruch 1, **dadurch gekennzeichnet, dass** der Sperrlack (2a, 2b) zu 45 bis 97 Gewichtsanteilen aus einer Mischung aus dem zumindest einem Acrylat und/oder dem zumindest einem Acrylatcopolymer sowie aus zumindest einem Urethan und/oder aus zumindest einem Urethancopolymer und/oder aus zumindest einem Alkyd und/oder zumindest einem Alkydacrylcopolymer besteht.

3. Verfahren nach Anspruch 1 oder 2, **dadurch gekennzeichnet, dass** der Sperrlack (2a, 2b) vor einem Überlackieren mit dem Decklack (3a, 3b) getrocknet wird.

4. Verfahren nach Anspruch 3, **dadurch gekennzeichnet, dass** der Sperrlack (2a, 2b) bei einer Temperatur zwischen 30 und 150°C getrocknet wird.

5. Verfahren nach einem der Ansprüche 1 bis 4, **dadurch gekennzeichnet, dass** dem Sperrlack (2a, 2b) ein Anteil an Filmbildungsmittel von bis zu 16% zugesetzt wird.

6. Verfahren nach einem der Ansprüche 1 bis 5, **dadurch gekennzeichnet, dass** der pH-Wert des Sperrlackes (2a, 2b) auf einen in einem basischen Bereich liegenden Wert, vorzugsweise auf einen in einem Bereich zwischen 7 bis 9 liegenden Wert, eingestellt wird.

7. Verfahren nach Anspruch 6, **dadurch gekennzeichnet, dass** der pH-Wert durch Zugabe von Ammoniak oder Aminen oder Laugen eingestellt wird.

8. Verfahren nach einem der Ansprüche 1 bis 7, **dadurch gekennzeichnet, dass** der Sperrlack (2a, 2b) einen Wachsanteil von bis zu 10% aufweist.

9. Verfahren nach einem der Ansprüche 1 bis 8, **dadurch gekennzeichnet, dass** dem Sperrlack (2a, 2b) zumindest ein Entschäumer in einem Anteil von 0,01 3 % zugesetzt wird.

10. Verfahren nach einem der Ansprüche 1 bis 9, **dadurch gekennzeichnet, dass** dem Sperrlack (2a, 2b) zumindest ein Verdicker in einem Anteil von bis zu 5% zugesetzt wird.

11. Verfahren nach einem der Ansprüche 1 bis 10, **dadurch gekennzeichnet, dass** dem Sperrlack (2a, 2b) zumindest ein Verlaufsmittel in einem Anteil von bis zu 3% zugesetzt wird.

12. Verfahren nach einem der Ansprüche 1 bis 11, **dadurch gekennzeichnet, dass** dem Sperrlack (2a, 2b) bis zu 18% an sich bekannte, farbgebende Pigmente und/oder Füllstoffe zugesetzt werden.

13. Verfahren nach einem der Ansprüche 1 bis 12, **dadurch gekennzeichnet, dass** der Sperrlack (2a, 2b) als Einkomponentenlack verwendet wird.

14. Verfahren nach einem der Ansprüche 1 bis 12, **dadurch gekennzeichnet, dass** der Sperrlack (2a, 2b) als Zweikomponentenlack verwendet wird, wobei dem Sperrlack (2a, 2b) zumindest ein Vernetzungsmittel zugesetzt wird.

15. Verfahren nach Anspruch 14, **dadurch gekennzeichnet, dass** als Vernetzungsmittel zumindest ein Isocyanat und/oder Aziridin und/oder zumindest ein Zinkkomplexbilder verwendet wird.

16. Verfahren nach einem der Ansprüche 1 bis 15, **dadurch gekennzeichnet, dass** der Sperrlack (2a, 2b) elektrisch leitfähig ist.

17. Verfahren nach Anspruch 16, **dadurch gekennzeichnet, dass** dem Sperrlack (2a, 2b) elektrisch leitfähige Pigmente beigefügt werden.

18. Verfahren nach Anspruch 16 oder 17, **dadurch gekennzeichnet, dass** der Sperrlack (2a, 2b) zumindest ein elektrisch leitfähiges Acrylat und/oder zumindest ein elektrisch leitfähiges Acrylatcopolymer und/oder zumindest ein elektrisch leitfähiges Polyurethan aufweist.

19. Verfahren nach einem der Ansprüche 1 bis 18, **dadurch gekennzeichnet, dass** der Decklack (3a) ein wässriger oder UV-Lack ist.

20. Verfahren nach einem der Ansprüche 16 bis 18, **dadurch gekennzeichnet, dass** der Decklack (3b) ein Pulverlack ist.

## Claims

1. A method for treating a surface of a compressed wood board (1) by coating, wherein a surface of the compressed wood board (1) to be coated with a top coat (3a, 3b) is primed with an aqueous barrier coat prior to coating, **characterized in that** the aqueous barrier coat is an aqueous acrylate-based barrier coat (2a, 2b) which comprises at least one acrylate and/or acrylate copolymer wherein, in order to produce a barrier against water vapour, the barrier coat (2a, 2b) comprises a proportion of more than 35% of synthetic resin, and wherein the barrier coat (2a, 2b) minimizes the raising of fibres of the compressed wood board during coating with the barrier coat (3a, 3b).

2. The method as claimed in claim 1, **characterized in that** the barrier coat (2a, 2b) consists of 45 to 97 parts by weight of a mixture of the at least one acrylate and/or the at least one acrylate copolymer as well as at least one urethane and/or at least one urethane copolymer and/or at least one alkyd and/or at least one alkyd-acrylic copolymer.

3. The method as claimed in claim 1 or claim 2, **characterized in that** the barrier coat (2a, 2b) is dried before being coated with the top coat (3a, 3b).

4. The method as claimed in claim 3, **characterized in that** the barrier coat (2a, 2b) is dried at a temperature in the range 30°C to 150°C.

5. The method as claimed in one of claims 1 to 4, **characterized in that** a film-forming agent is added to the barrier coat (2a, 2b) in a proportion of up to 16%.

6. The method as claimed in one of claims 1 to 5, **characterized in that** the pH of the barrier coat (2a, 2b) is adjusted to a value in the basic range, preferably to a value in the range 7 to 9.

7. The method as claimed in claim 6, **characterized in that** the pH is adjusted by adding ammonia or amines or alkaline solutions.

8. The method as claimed in one of claims 1 to 7, **characterized in that** the barrier coat (2a, 2b) comprises a wax in a proportion of up to 10%.

9. The method as claimed in one of claims 1 to 8, **characterized in that** at least one anti-foaming agent is added to the barrier coat (2a, 2b) in a proportion of 0.01-3%.

10. The method as claimed in one of claims 1 to 9, **characterized in that** at least one thickener is added to the barrier coat (2a, 2b) in a proportion of up to 5%.

11. The method as claimed in one of claims 1 to 10, **characterized in that** at least one levelling agent is added to the barrier coat (2a, 2b) in a proportion of up to 3%.

12. The method as claimed in one of claims 1 to 11, **characterized in that** up to 18% of colouring pigments and/or fillers which are known per se are added to the barrier coat (2a, 2b).

13. The method as claimed in one of claims 1 to 12, **characterized in that** the barrier coat (2a, 2b) is used as a single-component coat.

14. The method as claimed in one of claims 1 to 12, **characterized in that** the barrier coat (2a, 2b) is used as a two-component coat, wherein at least one curing agent is added to the barrier coat (2a, 2b).

15. The method as claimed in claim 14, **characterized in that** at least one isocyanate and/or aziridine and/or at least one zinc complexing agent is used as the curing agent.

16. The method as claimed in one of claims 1 to 15, **characterized in that** the barrier coat (2a, 2b) is electrically conductive.

17. The method as claimed in claim 16, **characterized in that** electrically conductive pigments are added to the barrier coat (2a, 2b).

18. The method as claimed in claim 16 or claim 17, **characterized in that** the barrier coat (2a, 2b) comprises at least one electrically conductive acrylate and/or at least one electrically conductive acrylate copolymer and/or at least one electrically conductive polyurethane.

19. The method as claimed in one of claims 1 to 18, **characterized in that** the top coat (3a) is an aqueous or UV coating.

20. The method as claimed in one of claims 16 to 18, **characterized in that** the top coat (3b) is a powder coating.

## Revendications

1. Procédé de traitement de surface d'une plaque de bois imprégné densifié (1) par application d'une peinture, dans lequel une surface supérieure à peindre à l'aide d'une peinture de finition (3a, 3b) va, avant la mise en peinture, être revêtue d'un apprêt aqueux (2a, 2b), **caractérisé en ce que** l'apprêt aqueux est un apprêt aqueux (2a, 2b) à base d'acrylate, qui présente au moins un acrylate et/ou un copolymère d'acrylate, dans lequel l'apprêt aqueux (2a, 2b) présente une teneur en résine synthétique de 35 % pour produire une barrière à la vapeur d'eau, et par l'intermédiaire de l'apprêt (2a, 2b), des fibres de la plaque de bois imprégné densifié qui se dressent pendant la peinture à l'aide de la peinture de finition (3a, 3b) sont réduites au minimum.

2. Procédé selon la revendication 1, **caractérisé en ce que** l'apprêt (2a, 2b) est constitué de 45 à 97 parties en poids d'un mélange du au moins un acrylate et/ou du au moins un copolymère d'acrylate, ainsi que d'au moins un uréthane et/ou d'au moins un copolymère d'uréthane et/ou d'au moins un alkyde et/ou au moins un copolymère alkyde acrylique.

3. Procédé selon la revendication 1 ou 2, **caractérisé en ce que** l'apprêt (2a, 2b) est séché avant le recouvrement avec la peinture de finition (3a, 3b).

4. Procédé selon la revendication 3, **caractérisé en ce que** l'apprêt (2a, 2b) est séché à une température comprise entre 30 et 150°C

5. Procédé selon l'une quelconque des revendications 1 à 4, **caractérisé en ce qu'**à l'apprêt (2a, 2b) est ajoutée une proportion d'agent filmogène allant jusqu'à 16 %.

6. Procédé selon l'une quelconque des revendications 1 à 5, **caractérisé en ce que** la valeur du pH de l'apprêt (2a, 2b) est ajustée à une valeur comprise dans une plage de base, de préférence à une valeur comprise dans une plage allant de 7 à 9.

7. Procédé selon la revendication 6, **caractérisé en ce que** la valeur du pH est ajustée par l'ajout d'ammoniac ou d'amines ou de lessives.

8. Procédé selon l'une quelconque des revendications 1 à 7, **caractérisé en ce que** l'apprêt (2a, 2b) présente une teneur en cire pouvant aller jusqu'à 10 %.

9. Procédé selon l'une des revendications 1 à 8, **caractérisé en ce qu'**à l'apprêt (2a, 2b) est ajouté au moins un agent anti-mousse, en une proportion de 0,01 à 3 %.

10. Procédé selon l'une quelconque des revendications 1 à 9, **caractérisé en ce qu'**à l'apprêt (2a, 2b) est ajouté au moins un agent épaississant, en une proportion allant jusqu'à 5 %.

11. Procédé selon l'une quelconque des revendications 1 à 10, **caractérisé en ce qu'**à l'apprêt (2a, 2b) est ajouté au moins un agent fluidifiant, en une proportion allant jusqu'à 3 %.

12. Procédé selon l'une quelconque des revendications 1 à 11, **caractérisé en ce qu'**à l'apprêt (2a, 2b) sont ajoutés jusqu'à 18 % de pigments et/ou de charges de coloration connu(e)s en soi.

13. Procédé selon l'une quelconque des revendications 1 à 12, **caractérisé en ce que** l'apprêt (2a, 2b) est utilisé en tant que composant unique.

14. Procédé selon l'une quelconque des revendications 1 à 12, **caractérisé en ce que** l'apprêt (2a, 2b) est utilisé comme peinture à deux composants, dans lequel à l'apprêt (2a, 2b) est ajouté au moins un agent de réticulation.

15. Procédé selon la revendication 14, **caractérisé en ce qu'**est utilisé comme agent de réticulation au moins un isocyanate et/ou une aziridine et/ou au moins un agent complexant de zinc.

16. Procédé selon l'une quelconque des revendications 1 à 15, **caractérisé en ce que** l'apprêt (2a, 2b) est électriquement conducteur.

17. Procédé selon la revendication 16, **caractérisé en ce qu'**à l'apprêt (2a, 2b) sont ajoutés des pigments électriquement conducteurs.

18. Procédé selon les revendications 16 ou 17, **caractérisé en ce que** l'apprêt (2a, 2b) comprend au moins un acrylate électriquement conducteur et/ou au moins un copolymère d'acrylate électriquement conducteur et/ou au moins un polyuréthanne électriquement conducteur.

19. Procédé selon l'une quelconque des revendications 1 à 18, **caractérisé en ce que** la peinture de finition (3a) est une peinture aqueuse ou UV.

20. Procédé selon l'une quelconque des revendications 16 à 18, **caractérisé en ce que** la peinture de finition (3b) est une peinture en poudre.
